# EUROPÄISCHE PATENTSCHRIFT

(11) **EP 3 095 643 B1**
(45) Veröffentlichungstag und Bekanntmachung des Hinweises auf die Patenterteilung: **19.09.2018**
(21) Anmeldenummer: 16167587.1
(22) Anmeldetag: 29.04.2016
(51) Int. Cl.: B60Q 3/00

(54) **FAHRERASSISTENZSYSTEM ZUM UNTERSTÜTZEN EINER PERSON BEIM AUSSTEIGEN AUS EINEM KRAFTFAHRZEUG, KRAFTFAHRZEUG SOWIE VERFAHREN**
DRIVER ASSISTANCE SYSTEM FOR ASSISTING AN INDIVIDUAL WHEN EXITING A MOTOR VEHICLE, MOTOR VEHICLE AND METHOD
SYSTEME D'ASSISTANCE AU CONDUCTEUR POUR ASSISTER UNE PERSONNE LORS DE LA DESCENTE D'UN VEHICULE AUTOMOBILE, VEHICULE AUTOMOBILE ET PROCEDE

(30) Priorität: 19.05.2015 DE 102015006425
(43) Veröffentlichungstag der Anmeldung: 23.11.2016
(73) Patentinhaber: AUDI AG, 85045 Ingolstadt (DE); HELLA GmbH & Co. KGaA, 59552 Lippstadt (DE)
(72) Erfinder: Pfeil, Marcus, 90537 Feucht (DE); Göllnitz, Sascha, 85080 Gaimersheim (DE); Devan, Siva Prasad, 79669 Zell im Wiesental (DE)

(56) Entgegenhaltungen:
- EP-A2- 2 607 171
- DE-A1- 10 312 252
- DE-A1-102011 015 103
- DE-A1-102011 076 340
- DE-A1-102011 086 215
- DE-A1-102012 014 939
- DE-A1-102013 005 018

## Beschreibung

Die Erfindung betrifft ein Fahrerassistenzsystem zum Unterstützen einer Person beim Aussteigen aus einem Kraftfahrzeug mit einer ersten fahrzeugseitigen Sensoreinrichtung zum Erfassen eines Abstandes von zumindest einem Objekt in einem Umgebungsbereich des Kraftfahrzeugs zu dem Kraftfahrzeug in einem abgestellten Zustand des Kraftfahrzeugs. Die Erfindung betrifft außerdem ein Kraftfahrzeug sowie ein Verfahren.

Fahrerassistenzsysteme, welche einen Fahrer eines Kraftfahrzeugs beim Führen des Kraftfahrzeugs während der Fahrt unterstützen, sind bereits aus dem Stand der Technik bekannt. So zeigt die DE 10 2008 064 022 A1, dass dem Fahrer Warninformationen über eine Ambientenbeleuchtung im Innenraum des Kraftfahrzeugs angezeigt werden können. In der DE 10 2012 015 753 A1 wird eine Innenraumbeleuchtung eines Kraftfahrzeugs zum Warnen eines Fahrers vor einer Kollisionsgefahr des Kraftfahrzeugs mit einem Objekt angesteuert. Ausführungen von Innenraumbeleuchtungen sind beispielsweise in der DE 10 2006 024 194 A1 beschrieben.

Aber auch in einem abgestellten Zustand des Kraftfahrzeugs, in welchem sich das Kraftfahrzeug nicht fortbewegt, ist es wünschenswert, Insassen des Kraftfahrzeugs zu unterstützen bzw. vor drohenden Gefahren zu schützen. So geschehen beispielsweise vermehrt Unfälle beim Aussteigen aus dem Kraftfahrzeug durch Kollisionen der aussteigenden Personen mit herannahenden Fahrradfahrern oder Fahrzeugen.

Hierzu beschreibt die DE 10 2013 005 018 A1 ein Kraftfahrzeug mit wenigstens einer Tür und einer Türkollisionswarnvorrichtung. Die Türkollisionswarnvorrichtung umfasst Türumgebungssensor, einen der Tür zugeordneten Türwinkelsensor und eine Ausgabevorrichtung, die zum Empfang und zur Ausgabe einer Türkollisionsinformation mit einer Datenverarbeitungsvorrichtung gekoppelt ist, wobei die Türkollisionsinformation mittels der Datenverarbeitungsvorrichtung in Abhängigkeit eines Abstands der Tür von einem Hindernis bestimmbar ist. Die Ausgabevorrichtung kann beispielsweise mit mehreren Leuchtsymbolen, die bei einem höheren Gefährdungsniveau, d. h., einem kleineren verbleibenden Restabstand zum Hindernis, größer sind als bei einem geringen Gefährdungsniveau. Die Warnleuchten können bevorzugt auch unterschiedliche Farben aufweisen, wobei es besonders vorteilhaft ist, wenn die von Verkehrsampeln bekannte Farbcodierung aufgegriffen wird.

DE 10.2013.005.018 offenbart ein System gemäß dem Oberbegriff des Anspruchs 1. Es ist Aufgabe der vorliegenden Erfindung, eine Lösung bereitzustellen, bei welcher Personen besonders zuverlässig beim Aussteigen aus dem Kraftfahrzeug unterstützt werden können.

Diese Aufgabe wird erfindungsgemäß durch ein Fahrerassistenzsystem, ein Kraftfahrzeug sowie ein Verfahren mit den Merkmalen gemäß den unabhängigen Patentansprüchen gelöst. Vorteilhafte Ausführungen der Erfindung sind Gegenstand der abhängigen Patentansprüche, der Beschreibung und der Figuren.

Ein erfindungsgemäßes Fahrerassistenzsystem dient zum Unterstützen zumindest einer Person beim Aussteigen aus einem Kraftfahrzeug. Das Fahrerassistenzsystem umfasst eine erste fahrzeugseitige Sensoreinrichtung zum Erfassen eines Abstandes von zumindest einem Objekt in einem Umgebungsbereich des Kraftfahrzeugs zu dem Kraftfahrzeug in einem abgestellten Zustand des Kraftfahrzeugs. Darüber hinaus umfasst das Fahrerassistenzsystem eine Beleuchtungseinrichtung zum Erzeugen eines Lichtstreifens durch Emittieren von Licht entlang einer vorgegebenen Kontur in einen Innenraum des Kraftfahrzeugs und eine Steuereinrichtung, wobei die Steuereinrichtung dazu ausgelegt ist, einen ersten Betriebsmodus für die Beleuchtungseinrichtung bereitzustellen, in welchem die Beleuchtungseinrichtung Licht mit einer ersten Wellenlänge emittiert, und, falls der durch die erste fahrzeugseitige Sensoreinrichtung erfasste Abstand einen vorgegebenen Mindestabstand unterschreitet, einen zweiten Betriebsmodus für die Beleuchtungseinrichtung bereitzustellen, in welchem die Beleuchtungseinrichtung Licht mit einer zweiten Wellenlänge emittiert.

Das Fahrerassistenzsystem, welches auch als Ausstiegsassistent bezeichnet wird, dient zum Verhindert von Kollisionen von zumindest einer aus dem Kraftfahrzeug aussteigenden Person mit zumindest einem Objekt, beispielsweise einem Fahrradfahrer oder einem anderen Kraftfahrzeug, welcher oder welches sich beispielsweise einem Heck des Kraftfahrzeugs nähert und daher von der aussteigenden Person übersehbar ist. Dazu wird der Umgebungsbereich des Kraftfahrzeugs von der ersten fahrzeugseitigen Sensoreinrichtung in dem abgestellten Zustand des Kraftfahrzeugs erfasst. Die erste fahrzeugseitige Sensoreinrichtung kann beispielsweise Radarsensoren umfassen, welche in Seitenspiegeln oder Stoßfängern des Kraftfahrzeugs angeordnet sein können.

Um eine Kollision der zumindest einen Person oder des zumindest einen Insassen beim Aussteigen aus dem abgestellten Kraftfahrzeug mit dem zumindest einen Objekt zu verhindern, erfasst die erste Sensoreinrichtung in dem abgestellten Zustand des Kraftfahrzeugs kontinuierlich oder zu vorgegebenen Messzeitpunkten den Abstand des zumindest einen Objektes zu dem Kraftfahrzeug. Unter einem abgestellten Zustand des Kraftfahrzeugs ist hier ein Zustand des Kraftfahrzeugs zu verstehen, in welchem sich das Kraftfahrzeug nicht fortbewegt. Sobald der erfasste Abstand einen vorgegebenen Mindestabstand zu dem Kraftfahrzeug unterschreitet, droht dem Insassen beim Aussteigen aus dem Kraftfahrzeug eine Kollision mit dem Objekt.

Um dies zu verhindern, wird dem Insassen ein optisches Signal über die Beleuchtungseinrichtung ausgegeben. Die Beleuchtungseinrichtung ist als eine sogenannte Konturbeleuchtung ausgestaltet und dient zum Beleuchten einer Kontur entlang einer durch die Kontur vorgegebene Strecke im Innenraum des Kraftfahrzeugs. Standardmäßig wird die Beleuchtungseinrichtung in dem ersten Betriebsmodus betrieben und erfüllt dabei eine sogenannte Ambientenfunktion bzw. stellt eine sogenannte Ambientenbeleuchtung bereit. Durch die Ambientenfunktion der Beleuchtungseinrichtung können beispielsweise bestimmte Konturen im Innenraum des Kraftfahrzeugs hervorgehoben und betont werden und den Insassen, beispielsweise bei Dunkelheit, eine Orientierung im Innenraum des Kraftfahrzeugs ermöglichen. Dazu emittiert die Beleuchtungseinrichtung in dem ersten Betriebsmodus Licht mit der ersten Wellenlänge bzw. einem ersten Wellenlängenspektrum. Mit anderen Worten bedeutet dies, dass die Kontur im ersten Betriebsmodus in einer ersten Farbe beleuchtet wird. Die erste Wellenlänge bzw. das erste Wellenlängenspektrum kann beispielsweise aus einem Wellenlängenbereich zwischen 530 nm und 580 nm ausgewählt werden, wodurch die Kontur gelb beleuchtet wird. Die Ambientenfunktion und damit der erste Betriebsmodus können auch bereitgestellt werden, wenn sich das Kraftfahrzeug fortbewegt, also während einer Fahrt des Kraftfahrzeugs.

Sobald sich das Kraftfahrzeug in dem abgestellten Zustand befindet und von der ersten Sensoreinrichtung die drohende Kollision der aussteigenden Person mit dem Objekt erfasst wird, stellt die Steuereinrichtung den zweiten Betriebsmodus für die selbe Beleuchtungseinrichtung bereit, in welchem die Beleuchtungseinrichtung eine Assistenzfunktion erfüllt. In dem zweiten Betriebsmodus emittiert die Beleuchtungseinrichtung Licht mit der von der ersten Wellenlänge unterschiedlichen zweiten Wellenlänge bzw. einem von dem ersten Wellenlängenspektrum unterschiedlichen zweiten Wellenlängenspektrum. Mit anderen Worten bedeutet dies, dass die Kontur in dem zweiten Betriebsmodus der Beleuchtungseinrichtung in einer anderen Farbe beleuchtet wird als in dem ersten Betriebsmodus der Beleuchtungseinrichtung. Die zweite Wellenlänge bzw. das zweite Wellenlängenspektrum kann beispielsweise aus einem Wellenlängenbereich zwischen 630 nm und 790 nm ausgewählt werden, wodurch die Kontur rot beleuchtet wird und der Insasse besonders eindringlich auf die drohende Kollision hingewiesen werden kann. Durch den Lichtstreifen, welcher zwischen den Betriebsmodi die Farbe wechselt, kann also eine deutlich sichtbare, lange und leuchtende Rückmeldelinie im Innenraum des Kraftfahrzeugs erzeugt werden. Durch die Multifunktionalität der Beleuchtungseinrichtung, also die Ambientenfunktion und die Assistenzfunktion, ist das Fahrerassistenzsystem zudem besonders kostengünstig und einfach gestaltet.

Zudem weist die Beleuchtungseinrichtung ein Gehäuseelement, ein länglich geformtes Lichtleitelement zum Emittieren des Lichtes entlang der Kontur, einen Diffusor mit einem Einkoppelbereich zum Einkoppeln des von dem Lichtleitelement emittierten Lichtes und einem dem Innenraum des Kraftfahrzeugs zugewandten Auskoppelbereich zum Auskoppeln des emittierten Lichtes und ein Halteelement auf, wobei das Gehäuseelement und das Halteelement zum Ausbilden eines Aufnahmeraumes für das Lichtleitelement und zum Halten des Diffusors mechanisch verbunden sind, und das Gehäuseelement einen Frontbereich aufweist, welcher zum Erzeugen des Lichtstreifens entlang der Kontur den Auskoppelbereich des Diffusors bereichsweise bedeckt.

Die Beleuchtungseinrichtung bzw. die Konturbeleuchtung umfasst dabei ein an sich bekanntes Lichtleitelement bzw. einen Lichtleiter, welcher beispielsweise als eine Lichtleitfaser ausgebildet sein kann und entlang der vorbestimmten Kontur Licht emittiert. Der Lichtleiter kann dabei das von einer Lichtquelle eingekoppelte Licht durch einen Innenraum des Lichtleiters leiten und durch eine den Innenraum umgebende Oberfläche das eingekoppelte Licht entlang der Kontur emittieren. Dabei kann es vorgesehen sein, dass der Lichtleiter nur in Richtung des Innenraums Licht emittiert, indem beispielsweise die Oberfläche des Lichtleiters nur bereichsweise optisch durchlässig für das Licht ausgestaltet ist und somit das Licht nur in diesem Emissionsbereich durch die Oberfläche hindurch aus dem Innenraum des Lichtleiters austreten kann.

Der Lichtleiter ist dabei entlang der Kontur in dem Aufnahmeraum angeordnet, welcher durch das Halteelement und das Gehäuseelement ausgebildet ist. Das Gehäuseelement und das Haltelement bilden dabei zwei Teile eines mehrteiligen Gehäuses und sind mechanisch, insbesondere durch Verschweißen, miteinander verbunden. Der Aufnahmeraum kann beispielsweise entlang der Kontur durch eine längliche, kanalförmige Vertiefung in dem Gehäuseelement ausgebildet sein, welche beispielsweise durch das Halteelement entlang der Kontur abgedeckt wird.

Das emittierte Licht des Lichtleiters wird in den Einkoppelbereich des Diffusors, welcher beispielsweise als eine Streuscheibe ausgebildet sein kann, eingekoppelt. Zum Einkoppeln des Lichtes kann der Diffusor eine erste Stirnfläche als den Einkoppelbereich aufweisen und zum Auskoppeln des Lichtes eine der ersten Stirnfläche gegenüberliegende zweite Stirnfläche als den Auskoppelbereich aufweisen. Der Diffusor wird dabei durch das Gehäuseelement und das Halteelement gehalten. Insbesondere wird der Diffusor so gehalten, dass der Einkoppelbereich angrenzend an den Lichtleiter, insbesondere angrenzend an den Emissionsbereich des Lichtleiters, angeordnet ist.

Um eine Lichtsaustrittsfläche des Auskoppelbereiches zu reduzieren und damit den Leuchtstreifen auszubilden, ist der dem Innenraum des Fahrzeugs zugewandte Frontbereich des Gehäuses bereichsweise über dem Auskoppelbereich angeordnet. Dadurch tritt das Licht nur über den nicht durch den Frontbereich bedeckten Bereich des Auskoppelbereiches aus dem Diffusor in den Innenraum des Kraftfahrzeugs. Somit kann auf besonders einfache Weise ein besonders schmaler Leuchtstreifen hergestellt werden, ohne dafür auf aufwändige Weise präzise und schmale Kanten an dem Diffusor herstellen zu müssen. Insbesondere weist der Lichtstreifen eine Breite auf, welche kleiner als 1 mm ist. Insbesondere ist ein Wert für die Breite des Lichtstreifen aus einem Bereich zwischen zumindest 0,3 mm und höchstens 0,8 mm ausgewählt. Mit anderen Worten bedeutet dies, dass durch die bereichsweise Abdeckung des Auskoppelbereiches durch die Frontseite des Gehäuseelementes die Lichtaustrittsfläche des Auskoppelbereiches eine Breite kleiner als 1 mm aufweist.

Gemäß einer Weiterbildung der Erfindung ist die Steuereinrichtung dazu ausgelegt, in dem zweiten Betriebsmodus eine erste Betriebsstufe für die Beleuchtungseinrichtung bereitzustellen, in welcher die Beleuchtungseinrichtung das Licht intervallartig emittiert. Die erste Betriebsstufe ist eine sogenannten Informationsstufe und wird zum Informieren der zumindest einen Person in dem Kraftfahrzeug über die drohende Kollision mit dem zumindest einen Objekt beim Aussteigen aus dem Kraftfahrzeug verwendet. Während der ersten Betriebsstufe steuert die Steuereinrichtung die Beleuchtungseinrichtung zum intervallartigen oder gepulsten Aussenden des Lichtes, welches die zweite Wellenlänge aufweist, an. Mit anderen Worte bedeutet dies, dass der Lichtstreifen in der ersten Betriebsstufe blinkt. Somit kann der Nutzer besonders deutlich auf die drohende Kollision aufmerksam gemacht werden.

In einer Ausführungsform der Erfindung weist das Fahrerassistenzsystem eine zweite fahrzeugseitige Sensoreinrichtung zum Erfassen eines Öffnens zumindest einer Türe des Kraftfahrzeugs auf. Außerdem ist die Steuereinrichtung dazu ausgelegt, in dem zweiten Betriebsmodus eine zweite Betriebsstufe für die Beleuchtungseinrichtung bereitzustellen, in welchem die Beleuchtungseinrichtung das Licht kontinuierlich emittiert, falls durch die zweite fahrzeugseitige Sensoreinrichtung das Öffnen zumindest einer Türe erfasst wird. Die zweite Sensoreinrichtung kann dazu ausgelegt sein, zu erfassen, ob die Person innerhalb des Kraftfahrzeugs den Türgriff zum Öffnen der Türe betätigt. Ferner kann die zweite Sensoreinrichtung dazu ausgelegt sein, zu erfassen, ob die Türe von einer Geschlossenstellung in eine Offenstellung bewegt wird Um die aussteigende Person besonders eindringlich auf die drohende Kollision hinzuweisen, wird als die zweite Betriebsstufe in dem zweiten Betriebsmodus eine sogenannte Warnstufe bereitgestellt. Der Lichtstreifen leuchtet in dieser Warnstufe kontinuierlich und stellt somit ein besonders prägnantes Warnsignal dar.

Es kann vorgesehen sein, dass die Beleuchtungseinrichtung dazu ausgelegt ist, das Licht in der ersten Betriebsstufe mit einer ersten Intensität zu emittieren und in der zweiten Betriebsstufe mit einer gegenüber der ersten Intensität größeren zweiten Intensität zu emittieren. Mit anderen Worten bedeutet dies, dass die Intensität bzw. eine Lichtstärke von der ersten auf die zweite Betriebsstufe erhöht wird. Somit ist das Fahrerassistenzsystem besonders benutzerfreundlich und intuitiv gestaltet, wodurch Kollisionen mit dem zumindest einen Objekt verhindert werden können.

Vorzugsweise ist die Beleuchtungseinrichtung in zumindest einer Fahrzeugtüre des Kraftfahrzeugs angeordnet. Insbesondere wird dabei nur die Kontur derjenigen Fahrzeugtüre mit Licht der zweiten Wellenlänge beleuchtet, bei welcher durch Öffnen und Aussteigen aus dem Kraftfahrzeug durch diese geöffnete Fahrzeugtüre die Kollision mit dem zumindest einen Objekt droht. So können beispielsweise die fahrersitzseitigen Türen mit Licht der zweiten Wellenlänge, insbesondere rot, beleuchtet werden, wenn eine Kollision mit einem Objekt, beispielsweise einem anderen Kraftfahrzeug, droht, welches das Kraftfahrzeug links überholt, und die beifahrersitzseitige Türen mit Licht der zweiten Wellenlänge beleuchtet werden, wenn eine Kollision mit einem Objekt, beispielsweise mit einem Fahrradfahrer, droht, welcher das Kraftfahrzeug rechts auf einem Fahrradweg überholt. Durch das Anordnen der Beleuchtungseinrichtung in der zumindest einen Fahrzeugtüre befindet sich das durch die Beleuchtungseinrichtung erzeugte Warnsignal in einem Sichtbereich der aussteigenden Person. Das Fahrerassistenzsystem ist somit besonders kundenfreundlich und intuitiv gestaltet.

Besonders bevorzugt weist die Beleuchtungseinrichtung eine erste Lichtquelle zum Bereitstellen des Lichtes mit der ersten Wellenlänge, eine zweite Lichtquelle zum Bereitstellen des Lichtes mit der zweiten Wellenlänge und eine Gabeleinspeisung zum Einspeisen des Lichtes der jeweiligen Lichtquelle in das Lichtleitelement auf. Die Lichtquellen können beispielsweise als Lichtemittierende Dioden (LED) ausgestaltet sein und über die Gabeleinspeisung mit dem Lichtleitelement der Beleuchtungseinrichtung verbunden sein. Die Gabelspeisung kann beispielsweise eine erste Lichtleitfaser aufweisen, welcher mit der ersten Lichtquelle gekoppelt ist, eine zweite Lichtleitfaser aufweisen, welche mit der zweiten Lichtquelle gekoppelt ist, und eine dritte Lichtleitfaser aufweisen, welche mit dem Lichtleitelement der Beleuchtungseinrichtung gekoppelt ist. Die Gabeleinspeisung kann ein Bauteil sein, welcher die erste, die zweite und die dritte Lichtleitfaser aufweist. Die Gabeleinspeisung kann im Wesentlichen Y-förmig ausgebildet sein. Durch die Steuereinrichtung kann beispielsweise zum Bereitstellen des entsprechenden Betriebsmodus entschieden werden, welche LED bzw. welche Lichtquelle das von ihr ausgesendete Licht über die Gabeleinspeisung in das Lichtleitelement der Beleuchtungseinrichtung zum Beleuchten der Kontur einspeist. Durch Bereitstellen zweier Lichtquellen kann auf besonders vorteilhafter Weise mit ein und der selben Beleuchtungseinrichtung die entsprechende Funktion, also die Ambientenfunktion oder die Assistenzfunktion, bereitgestellt werden.

Gemäß einer Ausgestaltung der Erfindung sind das Gehäuseelement und/oder das Halteelement zumindest bereichsweise mit Chrom beschichtet. Insbesondere ist der in einer bestimmungsgemäßen Einbaulage, in welcher von der Beleuchtungseinrichtung nur ein den Lichtstreifen ausbildender Bereich des Auskoppelbereiches des Diffusors und der Frontbereich des Gehäuseelementes sichtbar sind, dieser sichtbare Frontbereich mit Chrom beschichtet. Somit ist das Gehäuseelement in vorteilhafter Weise gleichzeitig als ein Zierteil in dem Innenraum des Kraftfahrzeugs verwendbar.

Ein erfindungsgemäßes Kraftfahrzeug umfasst ein erfindungsgemäßes Fahrerassistenzsystem oder eine vorteilhafte Ausführungsform davon. Das Kraftfahrzeug ist insbesondere als Personenkraftwagen ausgebildet.

Zur Erfindung gehört außerdem ein Verfahren zum Unterstützen einer Person beim Aussteigen aus einem Kraftfahrzeug, bei welchem von einer ersten fahrzeugseitigen Sensoreinrichtung ein Abstand von zumindest einem Objekt in einem Umgebungsbereich des Kraftfahrzeugs zu dem Kraftfahrzeug in einem abgestellten Zustand des Kraftfahrzeugs erfasst wird. Darüber hinaus wird in einem ersten Betriebsmodus Licht von einer Beleuchtungseinrichtung mit einer ersten Wellenlänge entlang einer vorgegebenen Kontur in einen Innenraum des Kraftfahrzeugs emittiert und in einem zweiten Betriebsmodus Licht mit einer zweiten Wellenlänge entlang der vorgegebenen Kontur von der Beleuchtungseinrichtung emittiert, falls der durch die erste fahrzeugseitige Sensoreinrichtung erfasste Abstand einen Mindestabstand unterschreitet. Zudem wird das Licht von der Beleuchtungseinrichtung entlang einer vorgegebenen Kontur in einen Innenraum des Kraftfahrzeugs emittiert, wobei die Beleuchtungseinrichtung ein Gehäuseelement, ein länglich geformtes Lichtleitelement, mittels welchem das Licht entlang der Kontur emittiert wird, einen Diffusor mit einem Einkoppelbereich, in welchen das von dem Lichtleitelement emittierte Licht eingekoppelt wird, und einem dem Innenraum des Kraftfahrzeugs zugewandten Auskoppelbereich, aus welchem das emittierte Licht ausgekoppelt wird, und ein Halteelement aufweist, wobei das Gehäuseelement und das Halteelement zum Ausbilden eines Aufnahmeraumes für das Lichtleitelement und zum Halten des Diffusors mechanisch verbunden sind, und das Gehäuseelement einen Frontbereich aufweist, welcher zum Erzeugen des Lichtstreifens entlang der Kontur den Auskoppelbereich des Diffusors bereichsweise bedeckt.

Die mit Bezug auf das erfindungsgemäße Fahrerassistenzsystem vorgestellten bevorzugten Ausführungsformen und deren Vorteile gelten entsprechend für das erfindungsgemäße Kraftfahrzeug sowie für das erfindungsgemäße Verfahren.

Im Folgenden wird die Erfindung nun anhand von bevorzugten Ausführungsbeispielen, wie auch unter Bezugnahme auf die beigefügten Zeichnungen näher erläutert.

Es zeigen:
- Fig. 1: eine schematische Darstellung einer Ausführungsform eines erfindungsgemäßen Kraftfahrzeugs;
- Fig. 2: eine schematische Darstellung einer Ausführungsform einer erfindungsgemäßen Beleuchtungseinrichtung in einer Quer-schnittsansicht; und
- Fig. 3: eine schematische Darstellung einer Ausführungsform einer erfindungsgemäßen Beleuchtungseinrichtung in einer Quer-schnittsansicht mit einer Gabeleinspeisung und zwei Lichtquel-len.

Gleiche oder funktionsgleiche Elemente sind in den Figuren mit den gleichen Bezugszeichen versehen.

Bei den im Folgenden erläuterten Ausführungsbeispielen handelt es sich um bevorzugte Ausführungsformen der Erfindung. Bei den Ausführungsbeispiel en stellen aber die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

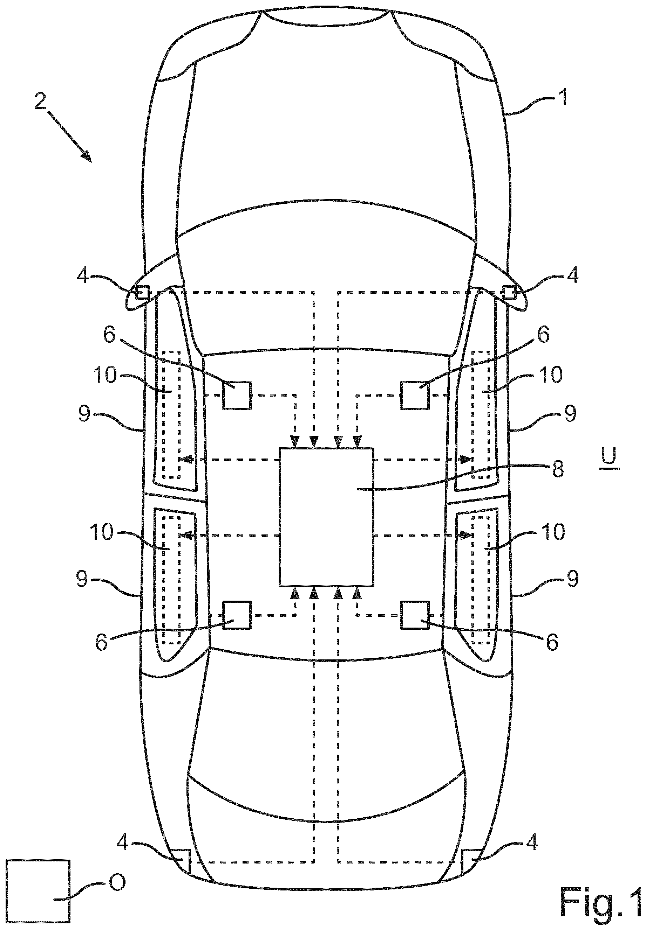

Fig. 1 zeigt ein Kraftfahrzeug 1 mit einem Fahrerassistenzsystem 2. Das Fahrerassistenzsystem 2, welches auch als Ausstiegsassistent bezeichnet wird, dient zum Unterstützen zumindest einer hier nicht gezeigten Person, welche sich in einem Innenraum des Kraftfahrzeugs 1 befindet, beim Aussteigen aus dem Kraftfahrzeug 1. Das Fahrerassistenzsystem 2 soll insbesondere verhindern, dass die zumindest eine Person beim Aussteigen aus dem Kraftfahrzeug 1 mit einem Objekt O, welches sich in einem Umgebungsbereich U des Kraftfahrzeugs 1 befindet, kollidiert.

Das Fahrerassistenzsystem 2 umfasst hier eine erste fahrzeugseitige Sensoreinrichtung 4, eine zweite fahrzeugseitige Sensoreinrichtung 6, eine Steuereinrichtung 8 und eine Beleuchtungseinrichtung 10. Die Beleuchtungseinrichtung 10 kann beispielsweise in zumindest einer Fahrzeugtüre 9 des Kraftfahrzeugs 1 angeordnet sein und einen Lichtstreifen durch Emittieren von Licht entlang einer Kontur, beispielsweise in einer Innenverkleidung der Fahrzeugtüre 9, in dem Innenraum des Kraftfahrzeugs 1 erzeugen.

Standardmäßig, beispielsweise während des Fortbewegens des Kraftfahrzeugs 1, wird von der Steuereinrichtung 8 ein erster Betriebsmodus für die Beleuchtungseinrichtung 10 bereitgestellt. In dem ersten Betriebsmodus erfüllt die Beleuchtungseinrichtung 10 beispielsweise eine Ambientenfunktion und emittiert Licht mit einer ersten Wellenlänge bzw. mit einem ersten Wellenlängenspektrum. Dies bedeutet, dass die Kontur in der zumindest einen Fahrzeugtüre 9 in einer ersten Farbe, beispielsweise gelb, beleuchtet wird. Die Ambientenfunktion dient beispielsweise zum Hervorheben bzw. Betonen der Konturen, um den Insassen bzw. den Personen im Innenraum des Kraftfahrzeugs 1, beispielsweise bei Dunkelheit, eine Orientierung in Innenraum des Kraftfahrzeugs 1 zu ermöglichen.

Die erste fahrzeugseitige Sensoreinrichtung 4 kann beispielsweise an Au-ßenspiegeln des Kraftfahrzeugs 1 und/oder an Stoßfängern des Kraftfahrzeugs 1 angeordnet sein und in einem abgestellten Zustand des Kraftfahrzeugs 1 einen Abstand des Objektes O in dem Umgebungsbereich U des Kraftfahrzeugs 1 zu dem Kraftfahrzeug 1 erfassen. Die erste Sensoreinrichtung 4 kann beispielsweise Radarsensoren umfassen. Wenn der Abstand des Objektes O zu dem Kraftfahrzeug 1 einen vorgegebenen Mindestabstand unterschreitet, so droht eine Kollision der Person beim Aussteigen aus dem Kraftfahrzeug 1 mit dem Objekt O. Um diese Kollision zu verhindern, stellt die Steuereinrichtung 8 bei der durch die erste fahrzeugseitige Sensoreinrichtung 4 erfassten Unterschreitung des Mindestabstandes einen zweiten Betriebsmodus für die Beleuchtungseinrichtung 10 bereit, in welchem die Beleuchtungseinrichtung 10 eine sogenannte Assistenzfunktion erfüllt. In dem zweiten Betriebsmodus emittiert die Beleuchtungseinrichtung 10 Licht mit einer zweiten Wellenlänge bzw. einem zweiten Wellenlängenspektrum. Dabei ist die zweite Wellenlänge bzw. das zweite Wellenlängenspektrum verschieden von der ersten Wellenlänge bzw. dem ersten Wellenlängenspektrum. Dies bedeutet, dass die Kontur in dem zweiten Betriebsmodus in einer anderen Farbe beleuchtet als in dem ersten Betriebsmodus. Die zweite Wellenlänge bzw. das zweite Wellenlängenspektrum kann dabei insbesondere aus einem Wellenlängenbereich zwischen 630 nm und 790 nm ausgewählt werden. Somit leuchtet der von der Beleuchtungseinrichtung 10 erzeugte Lichtstreifen also rot.

Es kann auch vorgesehen sein, dass die Steuereinrichtung 8 in dem zweiten Betriebsmodus eine erste Betriebsstufe für die Beleuchtungseinrichtung 10 bereitstellt, in welcher die Beleuchtungseinrichtung 10 das Licht mit der zweiten Wellenlänge intervallartig emittiert. Mit anderen Worten bedeutet dies, dass der Lichtstreifen in der ersten Betriebsstufe des zweiten Betriebsmodus blinkt. Diese erste Betriebsstufe dient als eine Informationsstufe zum Informieren der zumindest einen Person über eine mögliche Kollision mit dem Objekt O beim Aussteigen aus dem Kraftfahrzeug 1.

Auch kann die Steuereinrichtung 8 eine zweite Betriebsstufe in dem zweiten Betriebsmodus für die Beleuchtungseinrichtung 10 bereitstellen, in welcher die Beleuchtungseinrichtung 10 das Licht mit der zweiten Wellenlänge kontinuierlich emittiert. Die zweite Betriebsstufe, eine sogenannte Warnstufe, wird durch die Steuereinrichtung 8 bereitgestellt, wenn durch die zweite fahrzeugseitige Sensoreinrichtung 6 ist erfasst wird, dass zumindest eine der Fahrzeugtüren 9 des Kraftfahrzeugs 1 geöffnet wird. Dazu kann die zweite fahrzeugseitige Sensoreinrichtung 6 beispielsweise erfassen, ob die Person den Innentürgriff der Fahrzeugtüre 9 zum Öffnen der Fahrzeugtüre 9 betätigt. Durch das kontinuierliche Emittieren des Lichtes mit der zweiten Wellenlänge, insbesondere durch den kontinuierlich erzeugten roten Lichtstreifen, soll die Person besonders eindringlich vor der drohenden Kollision mit dem Objekt O gewarnt werden. Insbesondere kann zusätzlich eine Intensität oder eine Lichtstärke des emittierten Lichtes in der zweiten Betriebsstufe gegenüber der ersten Betriebsstufe erhöht werden.

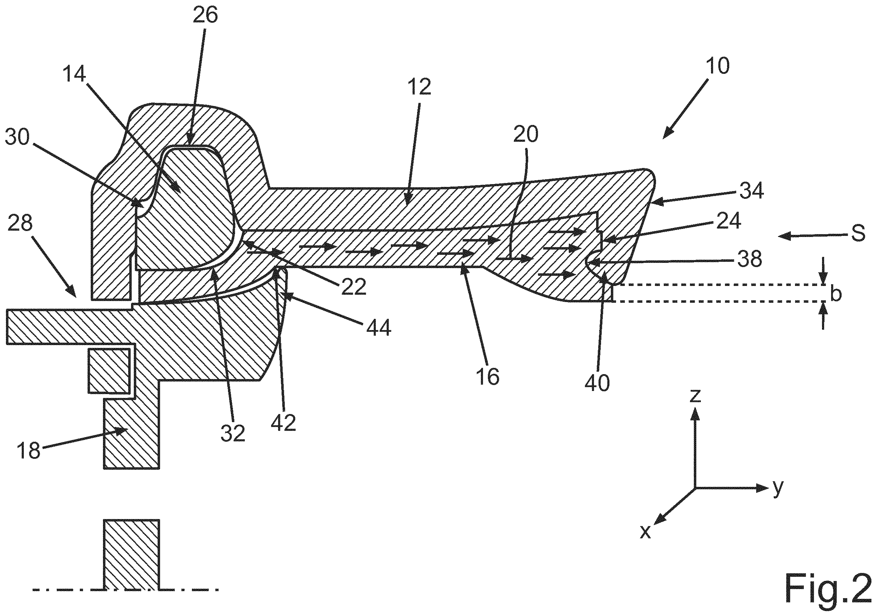

Fig. 2 zeigt eine Ausführungsform der Beleuchtungseinrichtung 10 zum Erzeugen des Lichtstreifens entlang der Kontur, insbesondere in der Fahrzeugtüre 9, in dem Innenraum des Kraftfahrzeugs 1 in einer geschnittenen Seitenansicht. Da die Beleuchtungseinrichtung 10 in einer Querschnittsansicht gezeigt ist, erstreckt sich die Kontur bzw. der erzeugte Lichtstreifen hier in x-Richtung in die Zeichenebene hinein bzw. aus der Zeichenebene heraus.

Die Beleuchtungseinrichtung 10 umfasst ein Gehäuseelement 12, ein Lichtleitelement 14, einen Diffusor 16 und ein Halteelement 18. Das Gehäuseelement 12 und das Halteelement 18 bilden zwei Teile eines mehrteiligen Gehäuses.

Das Lichtleitelement 14, welches beispielsweise als eine länglich geformte Lichtleitfaser ausgebildet ist, emittiert Licht 20 entlang der Kontur, insbesondere in y-Richtung. Der Diffusor 16 ist beispielsweise als eine Streuscheibe ausgebildet und beispielsweise mittels eines Spritzgussverfahrens als ein werkzeugfallendes Bauteil hergestellt. Der Diffusor 16 weist einen Einkoppelbereich 22 auf, welcher sich in x-Richtung erstreckt und welcher angrenzend an das Lichtleitelement 14 ausgebildet ist. In diesen Einkoppelbereich 22, welcher beispielsweise durch eine erste Stirnfläche der Streuscheibe gebildet ist, wird das von dem Lichtleitelement 14 in y-Richtung emittierte Licht 20 eingekoppelt. Das Licht 20 wird in y-Richtung durch den Diffusor 16 hindurch zu einem dem Einkoppelbereich 22 gegenüberliegenden Auskoppelbereich 24 des Diffusors 16 geleitet. Der Auskoppelbereich 24 weist dabei in Richtung des Innenraumes des Kraftfahrzeugs 1.

Das Gehäuseelement 12 weist hier eine kanalförmige Vertiefung 26 auf, in welcher das Lichtleitelement 14 angeordnet ist. Das Halteelement 18 ist mechanisch, beispielsweise über eine Schweißverbindung 28, mit dem Gehäuseelement 12 verbunden. Das Gehäuseelement 12 und das Halteelement 18 bilden einen Aufnahmeraum 30 für das Lichtleitelement 14 aus, indem das Halteelement 18 hier die längliche, kanalförmige Vertiefung 26 überdeckt. Darüber hinaus wird durch das Gehäuseelement 12 und das Halteelement 18 der Diffusor 16 gehalten. Hier ist der Diffusor 16 zum Halten des Diffusors 16 bereichsweise in dem Aufnahmeraum 30 angeordnet und wird somit zwischen dem Halteelement 18 und dem Gehäuseelement 12 eingeklemmt. Innerhalb des Aufnahmebereiches 30 weist der Diffusor 16 entlang der Kontur in x-Richtung eine Wölbung 32 auf, welche das Lichtleitelement 14 zumindest bereichsweise umgibt. Die Wölbung 32 und die Vertiefung 26 bilden also einen Tunnel bzw. einen Kanal entlang der x-Richtung, durch welchen das Lichtleitelement 14 in x-Richtung verläuft und dabei das Licht 20 in y-Richtung emittiert. Der Bereich der Wölbung 32, welcher dem Auskoppelbereich 24 in negativer y-Richtung gegenüberliegt, bildet den bereits beschriebenen Einkoppelbereich 22.

Ein Frontbereich 34 des Gehäuseelementes 12 überdeckt den Auskoppelbereich 24 des Diffusors 16 bereichsweise. Dadurch wird eine Lichtaustrittsfläche 36, durch welche das Licht 20 den Auskoppelbereich 24 des Diffusors 16 in den Innenraum des Kraftfahrzeugs 1 verlässt, reduziert. Die Lichtaustrittsfläche 36 bildet einen Streifen aus, welcher vorzugsweise eine Breite b von unter 1 mm aufweist. Insbesondere beträgt die Breite b zwischen 0,3 mm und 0,8 mm.

Zum Halten des Diffusors 16 ist hier zusätzlich eine erste Ausnehmung 38 in dem Auskoppelbereich 24 des Diffusors 16 und eine zu der ersten Ausnehmung 38 korrespondierende erste Erhebung 40 in einer dem Auskoppelbereich 24 zugewandten Seite des Frontbereiches 34 des Gehäuseelementes 12 vorgesehen. Die erste Erhebung 40 ist dabei unter Ausbildung einer formschlüssigen Verbindung in der ersten Ausnehmung 38 angeordnet.

Außerdem ist hier zum Halten des Diffusors 16 eine zweite Ausnehmung 42 in einer dem Halteelement 18 zugewandten Seite des Diffusors 16 vorgesehen und eine zu der zweiten Ausnehmung korrespondierende zweite Erhebung 44 an dem Halteelement 18 vorgesehen. Die zweite Erhebung 44 ist dabei unter Ausbildung einer formschlüssigen Verbindung in der zweiten Ausnehmung 42 angeordnet.

In einer bestimmungsgemäßen Einbaulage in dem Kraftfahrzeug 1, beispielsweise in einer Innenverkleidung der Fahrzeugtür, ist nur ein Sichtbereich S der Beleuchtungseinrichtung 10 sichtbar, welcher die Lichtaustrittsfläche 36 des Diffusors 16 sowie den Frontbereich 34 des Gehäuseelementes 12 umfasst. Das Gehäuseelement 12, insbesondere der Frontbereich 34 des Gehäuseelementes 12, kann entlang der Kontur mit Chrom beschichtet sein. Somit kann das Gehäuseelement 12 auch als ein Zierteil im Innenraum des Kraftfahrzeugs 1 fungieren.

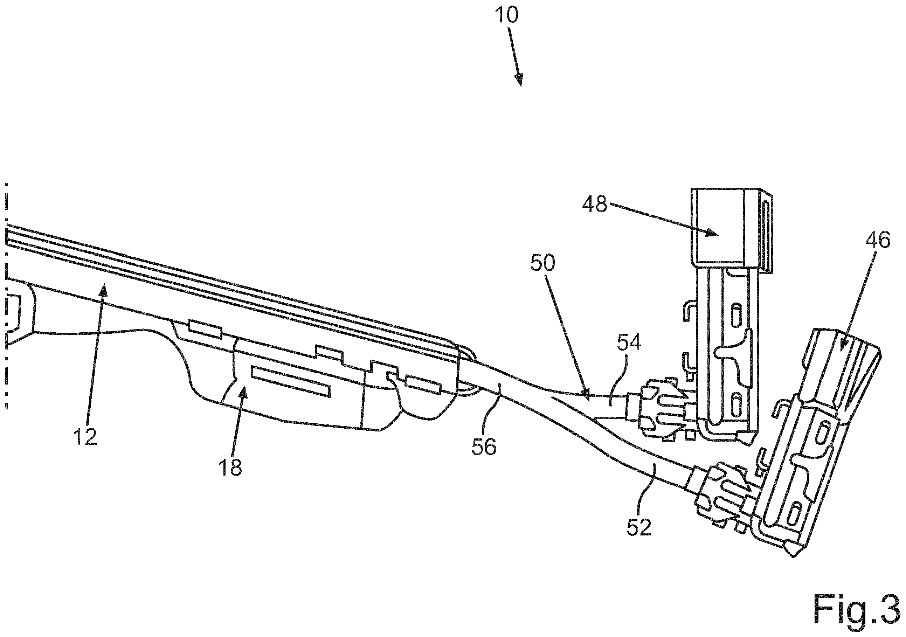

Fig. 3 zeigt eine Ausführungsform der Beleuchtungseinrichtung 10 mit einer ersten Lichtquelle 46 zum Emittieren von Licht mit der ersten Wellenlänge bzw. dem ersten Wellenlängenspektrum in dem ersten Betriebsmodus der Beleuchtungseinrichtung 10 und mit einer zweiten Lichtquelle zum Emittieren von Licht mit der zweiten Wellenlänge bzw. dem zweiten Wellenlängenspektrum in dem zweiten Betriebsmodus der Beleuchtungseinrichtung 10. Die erste Lichtquelle 46 und die zweite Lichtquelle 28 können beispielsweise als Lichtemittierende Dioden (LED) bzw. LED-Module ausgestaltet sein. Außerdem umfasst die Beleuchtungseinrichtung 10 eine Gabeleinspeisung 50 mit einer ersten Lichtleitfaser bzw. mit einem ersten Strang 52, welcher mit der ersten Lichtquelle 46 gekoppelt ist, einer zweiten Lichtleitfaser bzw. einem zweiten Strang 54, welcher mit der zweiten Lichtquelle 48 gekoppelt ist, und einer dritten Lichtleitfaser bzw. einem dritten Strang 56, welcher mit dem hier nicht dargestellten Lichtleitelement 14 der Beleuchtungseinrichtung 10 gekoppelt ist. Abhängig von dem Signal der ersten Sensoreinrichtung 4 wird zum Bereitstellen des ersten Betriebsmodus das Licht der ersten Lichtquelle 46 über den ersten Strang 52 und den dritten Strang 56 in das Lichtleitelement 14 eingekoppelt und zum Bereitstellen des zweiten Betriebsmodus das Licht der zweiten Lichtquelle 48 über den zweiten Strang 54 und den dritten Strang 56 in das Lichtleitelement 14 eingekoppelt.

Somit kann mit ein und der selben Beleuchtungseinrichtung 10 betriebsmodusabhängig entweder der erste Betriebsmodus und damit die Ambientenfunktion oder der zweite Betriebsmodus und damit die Assistenzfunktion bereitgestellt werden.

## Patentansprüche

1. Fahrerassistenzsystem (2) zum Unterstützen einer Person beim Aussteigen aus einem Kraftfahrzeug (1) mit einer ersten fahrzeugseitigen Sensoreinrichtung (4) zum Erfassen eines Abstandes von zumindest einem Objekt (O) in einem Umgebungsbereich (U) des Kraftfahrzeugs (1) zu dem Kraftfahrzeug (1) in einem abgestellten Zustand des Kraftfahrzeugs (1), wobei das Fahrerassistenzsystem (2) eine Beleuchtungseinrichtung (10) und eine Steuereinrichtung (8) aufweist, wobei die Steuereinrichtung (8) dazu ausgelegt ist, einen ersten Betriebsmodus für die Beleuchtungseinrichtung (10) bereitzustellen, in welchem die Beleuchtungseinrichtung (10) Licht (20) mit einer ersten Wellenlänge emittiert, und, falls der durch die erste fahrzeugseitige Sensoreinrichtung (4) erfasste Abstand einen vorgegebenen Mindestabstand unterschreitet, einen zweiten Betriebsmodus für die Beleuchtungseinrichtung (10) bereitzustellen, in welchem die Beleuchtungseinrichtung (10) Licht (20) mit einer zweiten Wellenlänge emittiert
**dadurch gekennzeichnet, dass**
die Beleuchtungseinrichtung (10) zum Erzeugen eines Lichtstreifens durch Emittieren von Licht (20) entlang einer vorgegebenen Kontur in einen Innenraum des Kraftfahrzeugs (1) ausgebildet ist, wobei die Beleuchtungseinrichtung (10) ein Gehäuseelement (12), ein länglich geformtes Lichtleitelement (14) zum Emittieren des Lichtes (20) entlang der Kontur, einen Diffusor (16) mit einem Einkoppelbereich (22) zum Einkoppeln des von dem Lichtleitelement (14) emittierten Lichtes (20) und einem dem Innenraum des Kraftfahrzeugs (1) zugewandten Auskoppelbereich (24) zum Auskoppeln des emittierten Lichtes (20) und ein Halteelement (18) aufweist, wobei das Gehäuseelement (12) und das Halteelement (18) zum Ausbilden eines Aufnahmeraumes (30) für das Lichtleitelement (14) und zum Halten des Diffusors (16) mechanisch verbunden sind, und das Gehäuseelement (12) einen Frontbereich (34) aufweist, welcher zum Erzeugen des Lichtstreifens entlang der Kontur den Auskoppelbereich (24) des Diffusors (16) bereichsweise bedeckt.

2. Fahrerassistenzsystem (2) nach Anspruch 1,
**dadurch gekennzeichnet, dass**
die Steuereinrichtung (8) dazu ausgelegt ist, in dem zweiten Betriebsmodus eine erste Betriebsstufe für die Beleuchtungseinrichtung (10) bereitzustellen, in welcher die Beleuchtungseinrichtung (10) das Licht (20) intervallartig emittiert.

3. Fahrerassistenzsystem (2) nach Anspruch 1 oder 2,
**dadurch gekennzeichnet, dass**
das Fahrerassistenzsystem (2) eine zweite fahrzeugseitige Sensoreinrichtung (6) zum Erfassen eines Öffnens zumindest einer Türe (9) des Kraftfahrzeugs (1) aufweist und die Steuereinrichtung (8) dazu ausgelegt ist, in dem zweiten Betriebsmodus eine zweite Betriebsstufe für die Beleuchtungseinrichtung (10) bereitzustellen, in welchem die Beleuchtungseinrichtung (10) das Licht (20) kontinuierlich emittiert, falls durch die zweite fahrzeugseitige Sensoreinrichtung (6) das Öffnen zumindest einer Türe (9) erfasst wird.

4. Fahrerassistenzsystem (2) nach Anspruch 2 oder 3,
**dadurch gekennzeichnet, dass**
die Beleuchtungseinrichtung (10) dazu ausgelegt ist, das Licht (20) in der ersten Betriebsstufe mit einer ersten Intensität zu emittieren und in der zweiten Betriebsstufe mit einer gegenüber der ersten Intensität größeren zweiten Intensität zu emittieren.

5. Fahrerassistenzsystem (2) nach einem der vorhergehenden Ansprüche,
**dadurch gekennzeichnet, dass**
die Beleuchtungseinrichtung (10) in zumindest einer Fahrzeugtüre (9) des Kraftfahrzeugs (1) angeordnet ist.

6. Fahrerassistenzsystem (2) nach einem der vorhergehenden Ansprüche,
**dadurch gekennzeichnet, dass**
die Beleuchtungseinrichtung (10) eine erste Lichtquelle (46) zum Bereitstellen des Lichtes (20) mit der ersten Wellenlänge, eine zweite Lichtquelle (48) zum Bereitstellen des Lichtes (20) mit der zweiten Wellenlänge und eine Gabeleinspeisung (50) zum Einspeisen des Lichtes (20) der jeweiligen Lichtquelle (46, 48) in das Lichtleitelement (14) aufweist.

7. Fahrerassistenzsystem (2) nach einem der vorhergehenden Ansprüche,
**dadurch gekennzeichnet, dass**
das Gehäuseelement (12) und/oder das Halteelement (18) zumindest bereichsweise mit Chrom beschichtet sind.

8. Kraftfahrzeug (1) mit einem Fahrerassistenzsystem (2) nach einem der vorhergehenden Ansprüche.

9. Verfahren zum Unterstützen einer Person beim Aussteigen aus einem Kraftfahrzeug (1), bei welchem von einer ersten fahrzeugseitigen Sensoreinrichtung (4) ein Abstand von zumindest einem Objekt (O) in einem Umgebungsbereich (U) des Kraftfahrzeugs (1) zu dem Kraftfahrzeug (1) in einem abgestellten Zustand des Kraftfahrzeugs (1) erfasst wird, wobei in einem ersten Betriebsmodus Licht (20) von einer Beleuchtungseinrichtung (10) mit einer ersten Wellenlänge und in einem zweiten Betriebsmodus Licht (20) mit einer zweiten Wellenlänge von der Beleuchtungseinrichtung (10) emittiert wird, falls der durch die erste fahrzeugseitige Sensoreinrichtung (4) erfasste Abstand einen vorgegebenen Mindestabstand unterschreitet,
**dadurch gekennzeichnet, dass**
das Licht (20) von der Beleuchtungseinrichtung (10) entlang einer vorgegebenen Kontur in einen Innenraum des Kraftfahrzeugs (1) emittiert wird, wobei die Beleuchtungseinrichtung (10) ein Gehäuseelement (12), ein länglich geformtes Lichtleitelement (14), mittels welchem das Licht (20) entlang der Kontur emittiert wird, einen Diffusor (16) mit einem Einkoppelbereich (22), in welchen das von dem Lichtleitelement (14) emittierte Licht (20) eingekoppelt wird, und einem dem Innenraum des Kraftfahrzeugs (1) zugewandten Auskoppelbereich (24), aus welchem das emittierte Licht (20) ausgekoppelt wird, und ein Halteelement (18) aufweist, wobei das Gehäuseelement (12) und das Halteelement (18) zum Ausbilden eines Aufnahmeraumes (30) für das Lichtleitelement (14) und zum Halten des Diffusors (16) mechanisch verbunden sind, und das Gehäuseelement (12) einen Frontbereich (34) aufweist, welcher zum Erzeugen des Lichtstreifens entlang der Kontur den Auskoppelbereich (24) des Diffusors (16) bereichsweise bedeckt.

## Claims

1. Driver assistance system (2) for assisting an individual when exiting a motor vehicle (1) with a first vehicle-side sensor device (4) for detecting a distance of at least one object (O) in a surrounding area (U) of the motor vehicle (1) to the motor vehicle (1), the motor vehicle (1) being in a parked state, wherein the driver assistance system (2) has a lighting device (10) and a control device (8), wherein the control device (8) is designed to supply a first operating mode for the lighting device (10), in which the lighting device (10) emits light (20) with a first wavelength, and, in the case that the distance detected by the first vehicle-side sensor device (4) undershoots a predetermined minimum distance, to supply a second operating mode for the lighting device (10), in which the lighting device (10) emits light (20) with a second wavelength, **characterised in that** the lighting device (10) is designed to generate a light strip by emitting light (20) along a predetermined contour in an interior of the motor vehicle (1), wherein the lighting device (10) has a housing element (12), a long formed light conducting element (14) for emitting the light (20) along the contour, a diffuser (16) with a coupling-in area (22) for coupling-in the light (20) emitted by the light conducting element (14) and with a coupling-out area (24) facing the interior of the motor vehicle (1) for coupling-out the emitted light (20), and a holding element (18), wherein the housing element (12) and the holding element (18) are mechanically connected to form a receiving room (30) for the light conducting element (14) and for holding the diffuser (16), and the housing element (12) has a front area (34) which partially covers the coupling-out area (24) of the diffuser (16) for generating the light strip along the contour.

2. Driver assistance system (2) according to claim 1, **characterised in that** the control device (8) is designed in the second operating mode to supply a first operating level for the lighting device (10) in which the lighting device (10) emits the light (20) in intervals.

3. Driver assistance system (2) according to claim 1 or 2, **characterised in that** the driver assistance system (2) has a second vehicle-side sensor device (6) for detecting an opening of at least one door (9) of the motor vehicle (1) and the control device (8) is designed in the second operating mode to supply a second operating level for the lighting device (10), in which the lighting device (10) emits the light (20) continuously, in the case that the opening of at least one door (9) is detected by the second vehicle-side sensor device (6).

4. Driver assistance system (2) according to claim 2 or 3, **characterised in that** the lighting device (10) is designed to emit the light (20) in the first operating level with a first intensity and in the second operating level to emit it with a second intensity which is larger in comparison with the first intensity.

5. Driver assistance system (2) according to one of the preceding claims, **characterised in that** the lighting device (10) is disposed in at least one vehicle door (9) of the motor vehicle (1).

6. Driver assistance system (2) according to one of the preceding claims, **characterised in that** the lighting device (10) has a first light source (46) for supplying the light (20) with the first wavelength, a second light source (48) for supplying the light (20) with the second wavelength and a fork feed (50) for feeding the light (20) of the respective light source (46, 48) into the light conducting element (14).

7. Driver assistance system (2) according to one of the preceding claims, **characterised in that** the housing element (12) and/or the holding element (18) are at least partially coated with chromium.

8. Motor vehicle (1) with a driver assistance system (2) according to one of the preceding claims.

9. Method for assisting an individual when exiting a motor vehicle (1), in which a distance of at least one object (O) in a surrounding area (U) of the motor vehicle (1) to the motor vehicle (1) is detected by a first vehicle-side sensor device (4), the motor vehicle (1) being in a parked state, wherein in a first operating mode light (20) with a first wavelength is emitted by a lighting device (10) and in a second operating mode light (20) with a second wavelength is emitted by the lighting device (10), in the case that the distance detected by the first vehicle-side sensor device (4) undershoots a predetermined minimum distance, **characterised in that** the light (20) is emitted from the lighting device (10) along a predetermined contour in an interior of the motor vehicle (1), wherein the lighting device (10) has a housing element (12), a long formed light conducting element (14) by means of which the light (20) is emitted along the contour, a diffuser (16) with a coupling-in area (22), in which the light (20) emitted from the light conducting element (14) is coupled-in and with a coupling-out area (24) facing the interior of the motor vehicle (1), out of which the emitted light (20) is coupled-out, and a holding element (18), wherein the housing element (12) and the holding element (18) are mechanically connected to form a receiving room (30) for the light conducting element (14) and for holding the diffuser (16), and the housing element (12) has a front area (34) which partially covers the coupling-out area (24) of the diffuser (16) for generating the light strip along the contour.

## Revendications

1. Système d'assistance au conducteur (2) servant à assister une personne lors de la descente d'un véhicule automobile (1) avec un premier dispositif de capteur (4) côté véhicule servant à détecter une distance entre au moins un objet (O) dans une zone d'environnement (U) du véhicule automobile (1) et le véhicule automobile (1) dans un état à l'arrêt du véhicule automobile (1), dans lequel le système d'assistance au conducteur (2) présente un dispositif d'éclairage (10) et un dispositif de commande (8), dans lequel le dispositif de commande (8) est configuré pour fournir un premier mode de fonctionnement pour le dispositif d'éclairage (10), dans lequel le dispositif d'éclairage (10) émet de la lumière (20) avec une première longueur d'onde, et, pour fournir, si la distance détectée par le premier dispositif de capteur (4) côté véhicule présente une valeur inférieure à une distance minimale spécifiée, un deuxième mode de fonctionnement pour le dispositif d'éclairage (10), dans lequel le dispositif d'éclairage (10) émet de la lumière (20) avec une deuxième longueur d'onde,
**caractérisé en ce que**
le dispositif d'éclairage (10) est réalisé pour générer une bande de lumière par l'émission de lumière (20) le long d'un contour spécifié dans un habitacle du véhicule automobile (1), dans lequel le dispositif d'éclairage (10) présente un élément de boîtier (12), un élément guide de lumière (14) formé de manière allongée, servant à émettre de la lumière (20) le long du contour, un diffuseur (16) avec une zone d'injection (22) servant à injecter la lumière (20) émise par l'élément guide de lumière (14) et une zone de découplage (24), tournée vers l'habitacle du véhicule automobile (1), servant à découpler la lumière (20) émise et un élément de maintien (18), dans lequel l'élément de boîtier (12) et l'élément de maintien (18) sont reliés de manière mécanique pour former un espace de logement (30) pour l'élément guide de lumière (14) et pour maintenir le diffuseur (16), et l'élément de boîtier (12) présente une zone frontale (34), qui recouvre par endroits la zone de découplage (24) du diffuseur (16) pour générer la bande de lumière le long du contour.

2. Système d'assistance au conducteur (2) selon la revendication 1,
**caractérisé en ce que**
le dispositif de commande (8) est configuré pour fournir dans le deuxième mode de fonctionnement une première phase de fonctionnement pour le dispositif d'éclairage (10), dans laquelle le dispositif d'éclairage (10) émet la lumière (20) par intermittence.

3. Système d'assistance au conducteur (2) selon la revendication 1 ou 2,
**caractérisé en ce que**
le système d'assistance au conducteur (2) présente un deuxième dispositif de capteur (6) côté véhicule servant à détecter une ouverture d'au moins une portière (9) du véhicule automobile (1) et le dispositif de commande (8) est configuré pour fournir dans le deuxième mode de fonctionnement une deuxième phase de fonctionnement pour le dispositif d'éclairage (10), dans laquelle le dispositif d'éclairage (10) émet la lumière (20) en continu, si l'ouverture d'au moins une portière (9) est détectée par le deuxième dispositif de capteur (6) côté véhicule.

4. Système d'assistance au conducteur (2) selon la revendication 2 ou 3,
**caractérisé en ce que**
le dispositif d'éclairage (10) est configuré pour émettre la lumière (20) dans la première phase de fonctionnement avec une première intensité et pour émettre la lumière dans la deuxième phase de fonctionnement avec une deuxième intensité plus importante que la première intensité.

5. Système d'assistance au conducteur (2) selon l'une quelconque des revendications précédentes,
**caractérisé en ce que**
le dispositif d'éclairage (10) est disposé dans au moins une portière de véhicule (9) du véhicule automobile (1).

6. Système d'assistance au conducteur (2) selon l'une quelconque des revendications précédentes,
**caractérisé en ce que**
le dispositif d'éclairage (10) présente une première source de lumière (46) servant à fournir la lumière (20) avec la première longueur d'onde, une deuxième source de lumière (48) servant à fournir la lumière (20) avec la deuxième longueur d'onde et un système d'alimentation à fourche (50) servant à alimenter en la lumière (20) de la source de lumière (46, 48) respective l'élément guide de lumière (14).

7. Système d'assistance au conducteur (2) selon l'une quelconque des revendications précédentes,
**caractérisé en ce que**
l'élément de boîtier (12) et/ou l'élément de maintien (18) sont revêtus au moins par endroits de chrome.

8. Véhicule automobile (1) avec un système d'assistance au conducteur (2) selon l'une quelconque des revendications précédentes.

9. Procédé servant à assister une personne lors de la descente d'un véhicule automobile (1), dans lequel une distance entre au moins un objet (O) dans une zone d'environnement (U) du véhicule automobile (1) et le véhicule automobile (1) dans un état à l'arrêt du véhicule automobile (1) est détectée par un premier dispositif de capteur (4) côté véhicule, dans lequel de la lumière (20) est émise par un dispositif d'éclairage (10) avec une première longueur d'onde dans un premier mode de fonctionnement et de la lumière (20) est émise avec une deuxième longueur d'onde par le dispositif d'éclairage (10) dans un deuxième mode de fonctionnement, si la distance détectée par le premier dispositif de capteur (4) côté véhicule présente une valeur inférieure à une distance minimale spécifiée,
**caractérisé en ce que**
la lumière (20) est émise par le dispositif d'éclairage (10) le long d'un contour spécifié dans un habitacle du véhicule automobile (1), dans lequel le dispositif d'éclairage (10) présente un élément de boîtier (12), un élément guide de lumière (14) formé de manière allongée, au moyen duquel la lumière (20) est émise le long du contour, un diffuseur (16) avec une zone d'injection (22), dans laquelle la lumière (20) émise par l'élément guide de lumière (14) est injectée, et une zone de découplage (24) tournée vers l'habitacle du véhicule automobile (1), de laquelle la lumière (20) émise est découplée, et un élément de maintien (18), dans lequel l'élément de boîtier (12) et l'élément de maintien (18) sont reliés de manière mécanique pour réaliser un espace de logement (30) pour l'élément guide de lumière (14) et pour maintenir le diffuseur (16), et l'élément de boîtier (12) présente une zone frontale (34), qui recouvre par endroits la zone de découplage (24) du diffuseur (16) pour générer la bande de lumière le long du contour.
